# EUROPÄISCHE PATENTSCHRIFT

(11) **EP 2 311 596 B1**
(45) Veröffentlichungstag und Bekanntmachung des Hinweises auf die Patenterteilung: **07.08.2013**
(21) Anmeldenummer: 10013372.7
(22) Anmeldetag: 06.10.2010
(51) Int. Cl.: B23K 26/08, B27D 5/00, B29C 63/00

(54) **Verfahren zur Bekantung von Werkstücken**
Method for edgebanding of workpieces
Procédé de bordage de pièces à usiner

(30) Priorität: 13.10.2009 DE 102009049107
(43) Veröffentlichungstag der Anmeldung: 20.04.2011
(73) Patentinhaber: IMA Klessmann GmbH Holzbearbeitungssysteme, 32312 Lübbecke (DE)
(72) Erfinder: Seifert, Uwe, 32361 Preussisch Oldendorf (DE)
(74) Vertreter: Schober, Mirko

(56) Entgegenhaltungen:
- EP-A1- 1 233 853
- EP-A2- 1 800 813
- DE-A1- 3 713 975

## Beschreibung

Die Erfindung betrifft ein Verfahren zur Bekantung von Werkstücken nach dem Oberbegriff von Anspruch 1, wie beispielsweise aus EP 1 800 813 A bekannt.

Es sind z.B. aus EP 1 163 864 A1 oder EP 1 233 853 B1 bzw. DE 19955575 A1 Verfahren zur Bekantung von Werkstücken bekannt, bei denen ein Kantenband an das Werkstück zunächst herangeführt und dann mit diesem verbunden wird. Dabei bildet sich durch die Heranführung des Kantenbandes an das Werkstück ein Fügespalt aus. Im Bereich dieses Fügespalts wird eine Haftschicht oder haftvermittelnde Schicht auf dem Kantenband durch Strahlung aktiviert, so dass sie ihre Haftwirkung entfalten kann. Als Strahlungsquelle kann beispielsweise ein Laser verwendet werden. Die Haftschicht absorbiert dabei einen Teil der Strahlung, der Rest der Strahlung wird von der Schicht wieder in die Umgebung reflektiert.

Aus EP 1 800 813 A ist bekannt, den Laserstrahl mittels eines Spiegels in den Fügespalt zweier zu verbindender Teile zu führen.

Nach Aktivierung der Haftschicht wird das Kantenband durch eine geeignete Andruckvorrichtung an das Werkstück gedrückt, wobei durch die aktivierte Haftschicht oder haftvermittelnde Schicht eine dauerhafte Verbindung zwischen Kantenband und Werkstück entsteht.

Nachteilig an dieser Vorgehensweise ist insbesondere, dass nur der absorbierte Teil der Strahlung zur Aktivierung der Haftschicht oder der haftvermittelnden Schicht genutzt werden kann. Des Weiteren kann sich die unkontrolliert an die Umgebung abgegebene Strahlung je nach verwendeter Strahlungsquelle unter Umständen schädlich auf Mensch oder Material auswirken.
Daher liegt der Erfindung die Aufgabe zugrunde, eine Vorrichtung und ein Verfahren der eingangs genannten Art anzugeben, durch die die erwähnten Nachteile nicht auftreten.

Gelöst wird diese Aufgabe mit den Merkmalen des Anspruchs 1, vorteilhafte Ausführungsformen finden sich in den.

Erfindungsgemäß ist ein Reflexionselement vorgesehen, auf welches die von der Haftschicht oder haftvermittelnden Schicht reflektierte Strahlung reflektiert wird und welches die auf das Reflexionselement auftreffende Strahlung wieder auf die Haftschicht oder haftvermittelnde Schicht zurück reflektiert. Hierdurch wird zum Einen der zur Aktivierung der Haftschicht oder haftvermittelnden Schicht nutzbare Anteil der Strahlung erhöht, so dass sich weniger Srahlungsverluste ergeben, zum Anderen wird auch die Sicherheit der Einrichtung verbessert, weil durch die erfindungsgemäße Maßnahme die Strahlung im Wesentlichen zwischen

Werkstück und Kantenband verbleibt und nicht unkontrolliert in den Arbeitsraum oder in andere Richtungen abgestrahlt werden kann. Bevorzugt ist das Reflexionselement so angeordnet, dass es in den Fügespalt zwischen Kantenband und Werkstück hineinreicht.

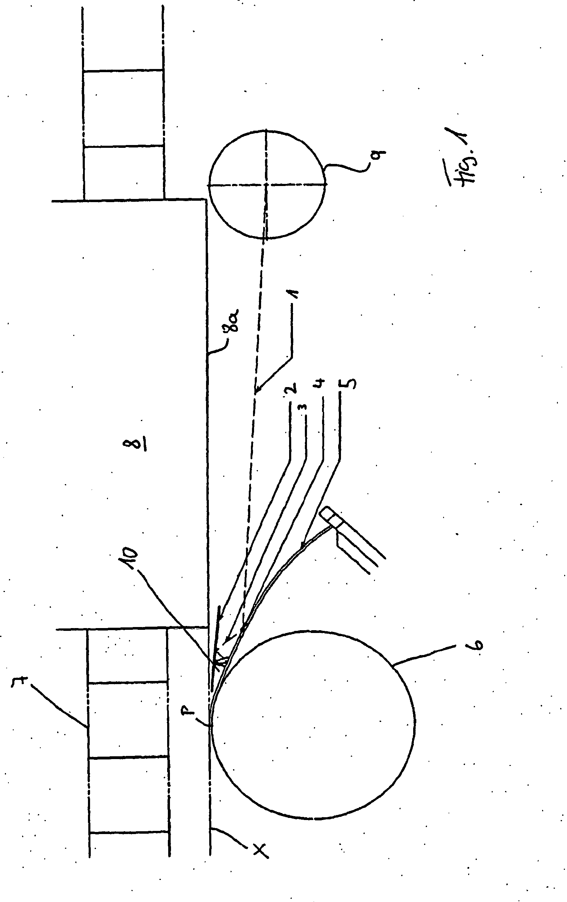

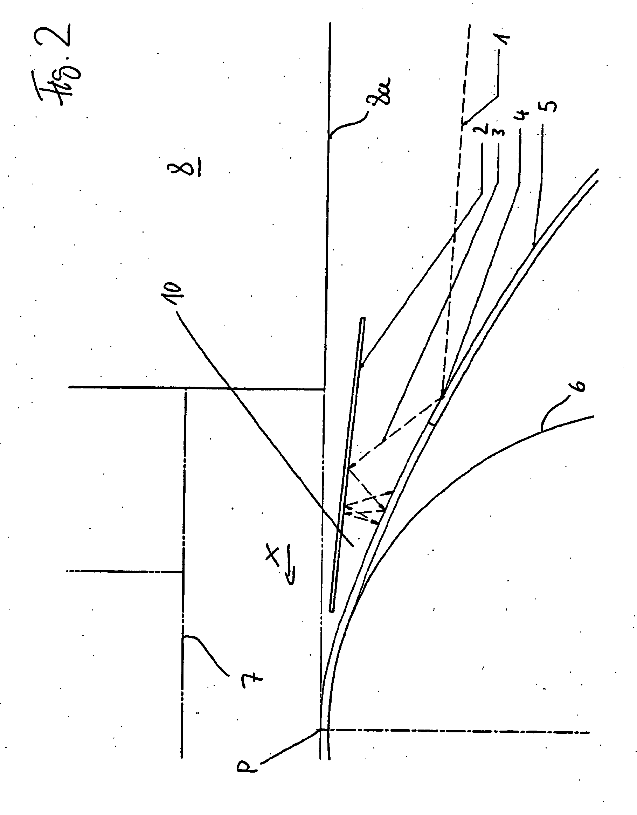

Die Erfindung wird nachfolgend anhand der Figuren 1 und 2 schematisch näher erläutert.
Figur 1 zeigt eine schematische Draufsicht auf eine Vorrichtung zur Durchführung des erfindungsgemäβen Verfahrens.
Figur 2 zeigt einen vergrößerten Ausschnitt der in Figur 1 gezeigten Vorrichtung.

Das mit dem Werkstück 8 zu verbindende Kantenband 5 wird der Andruckzone zugeführt, in der es durch eine Andruckeinrichtung 6, bevorzugt eine Andruckrolle, an das Werkstück 8 gedrückt wird. Beim Zusammenführen von Werkstück 8 und Kantenband 5 entsteht ein Fügespalt 10. Es ist ein Reflexionselement 2 vorgesehen, das in der dargestellten beispielhaften Ausführungsform in den Fügespalt 10 hineinreicht und sich in der beispielhaften Ausführungsform in einem spitzen Winkel zur Verarbeitungsrichtung X erstreckt.

Die Aktivierung der Haftschicht oder haftvermittelnden Schicht erfolgt durch die Strahlung 1, die von der beispielsweise um als Laser ausgebildeten Strahlungsquelle 9 abgegeben wird. Diese Strahlung 1 trifft in einer Auftreffzone 4 auf das Kantenband 5. Ein Teil der Strahlung 1 wird von der Haftschicht oder haftvermittelnden Schicht des Kantenbandes 5 absorbiert und aktiviert diese. Der andere Teil der Strahlung 3 wird wieder ausgestrahlt bzw. vom Kantenband 5 in die Umgebung reflektiert. Idealerweise wird diese wieder ausgestrahlte Strahlung 3 nach dem Reflexionsgesetz reflektiert. Je nach der Oberflächenbeschaffenheit der Haftschicht oder der haftvermittelnden Schicht kann es auch zu Abweichungen von der regemäßigen Reflexion kommen, beispielsweise einer Winkelverzerrung oder der diffusen Ausstrahlung (Streuung) zumindest eines Teils der reflektierten Strahlung 3.

Die reflektierte Strahlung 3 wird nun von dem Reflexionselement 2 vollständig oder zumindest zum großen Teil reflektiert. Idea-lerweise ist das Reflexionselement 2 zwischen Werkstück 8 und Kantenband 5 in den Fügespalt 10 hinein reichend angeordnet, so dass die vom Reflexionselement 2 reflektierte Strahlung zu einem möglichst großen Teil wieder auf das Kantenband 5 zurück reflektiert wird.

Von der Haftschicht oder der haftvermittelnden Schicht wird von dieser, nun zum zweiten Mal auf das Kantenband 5 treffenden, Strahlung ebenfalls wieder nur ein Teil absorbiert, so dass die zurück reflektierte Strahlung nicht unwiederbringlich verloren geht, sondern ebenfalls zur Aktivierung der Haftschicht oder haftvermittelnden Schicht beitragen kann. Es ist insbesondere möglich, dass es zu einer Wiederholung oder einer Mehrzahl an Wiederholungen des oben beschriebene Vorgangs der Strahlungsreflexion zwischen Reflexionselement 2 und Kantenband 5 kommt, wie dies insbesondere in Figur 2 durch den gestrichelt gezeichneten Strahlengang angedeutet ist.

## Patentansprüche

1. Verfahren zur Bekantung von Werkstücken (8) mit einem Kantenband (5), bei dem im Bereich einer Andruckzone das Kantenband (5) durch relative Bewegung von Werkstück (8) und Kantenband (5) an die Kante (8a) des Werkstücks (8) unter Bildung eines Fügespaltes (10) herangeführt wird und dann mittels einer Andrückeinrichtung (6) angedrückt wird, wobei eine aus einer Strahlungsquelle (9) ausgestrahlte Strahlung (1) in den Bereich des Fügespaltes (10) geführt wird und dort die Aktivierung einer Haftschicht oder haftvermittelnden Schicht bewirkt, mittels derer Kantenband (5) und Werkstück (8) verbunden werden, **dadurch gekennzeichnet, dass** wenigstens ein Reflexionselement (2) zur Reflexion von vom Kantenband reflektierter Strahlung (1) eingesetzt wird, wobei die Strahlung (1) so geführt wird, dass sie vor Auftreffen auf dem Reflexionselement (2) auf das Kantenband (5) trifft und das Reflexionselement (2) so positioniert wird, dass es sich zwischen Kantenband (5) und zu bekantendem Werkstück (8) erstreckt und wobei das Reflexionselement (2) so angeordnet wird, dass die darauf reflektierende Strahlung (1) auf das Kantenband (5) zurück reflektiert wird.

2. Verfahren nach Anspruch 1, **dadurch gekennzeichnet, dass** das Reflexionselement (2) zur Reflexion von Strahlung (1) in Richtung auf das Kantenband (5) eingesetzt wird.

3. Verfahren nach einem der Ansprüche 1 oder 2, **dadurch gekennzeichnet, dass** als Strahlung (1) eine Laserstrahlung eingesetzt wird.

4. Verfahren nach einem der Ansprüche 1 bis 3, **dadurch gekennzeichnet, dass** das Reflexionselement (2) im Wesentlichen in einer Verarbeitungsrichtung (X) oder in einem spitzen Winkel zur Verarbeitungsrichtung (X) sich erstreckend angeordnet wird, in die das Werkstück (8) oder das Kantenband (5) geführt werden.

## Claims

1. Method for edge banding workpieces (8) with an edging band (5), wherein, in the area of a contact pressure zone, the edging band (5) through relative movement of the workpiece (8) and edging band (5) is guided up against the edge (8a) of the workpiece (8) whilst forming a joining gap (10) and is then pressed against same by means of a contact pressure device (6), wherein a radiation (1) emerging from a radiation source (9) is guided into the area of the joining gap (10) and there actuates the activation of an adhesive coating or an adhesion-promoting layer, by means of which the edging band (5) and the workpiece (8) are connected, **characterised in that** at least one reflection element (2) is used for the reflection of the radiation (1) reflected by the edging band, wherein the radiation (1) is guided so that before striking the reflection element (2) it strikes the edging band (5) and the reflection element (2) is positioned so that it extends between the edging band (5) and the workpiece (8) which is to be edged, and wherein the reflection element (2) is arranged so that the radiation (1) reflecting thereon is reflected back to the edging band (5).

2. Method according to claim 1 **characterised in that** the reflection element (2) is used for reflecting the radiation (1) towards the edging band (5).

3. Method according to one of claims 1 or 2 **characterised in that** laser radiation is used as the radiation (1).

4. Method according to one of claims 1 to 3 **characterised in that** the reflection element (2) is arranged extending substantially in a processing direction (x) or at an acute angle to the processing direction (x) in which the workpiece (8) or the edging band (5) are guided.

## Revendications

1. Procédé pour border des pièces à traiter (8) avec une bande de chant (5), dans lequel, dans la région d'une zone de pression, la bande de chant (5) est amenée, par déplacement relatif de la pièce à traiter (8) et de la bande de chant (5), sur le chant (8a) de la pièce à traiter (8), en formant une fente d'assemblage (10) et est alors pressée au moyen d'un dispositif de pression (6), sachant qu'un faisceau (1), émis par une source de rayonnement (9), est guidé dans la région de la fente d'assemblage (10) et y provoque l'activation d'une couche adhésive ou d'une couche assurant l'adhésion, au moyen de laquelle la bande de chant (5) et la pièce à traiter (8) sont assemblées, **caractérisé en ce qu'**au moins un élément de réflexion (2) est mis en oeuvre pour réfléchir le faisceau (1), réfléchi par la bande de chant, sachant que le faisceau (1) est guidé de sorte qu'il frappe sur la bande de chant (5) avant de frapper sur l'élément de réflexion (2) et que l'élément de réflexion (2) est positionné de sorte qu'il s'étende entre la bande de chant (5) et la pièce à border (8), et sachant que l'élément de réflexion (2) est disposé de sorte que le faisceau (1) y réfléchi est retro réfléchi sur la bande de chant (5).

2. Procédé selon la revendication 1, **caractérisé en ce que** l'élément de réflexion (2) est utilisé pour la réflexion du faisceau (1) en direction de la bande de chant (5).

3. Procédé selon l'une des revendications 1 ou 2, **caractérisé en ce que** l'on utilise, comme faisceau (1), un faisceau laser.

4. Procédé selon l'une des revendications 1 à 3, **caractérisé en ce que** l'élément de réflexion (2) est disposé de sorte qu'il s'étend sensiblement dans une direction de traitement (X) ou en angle aigu par rapport à ladite direction de traitement (X), dans laquelle la pièce à traiter (8) ou la bande de chant (5) est guidée.
